# EUROPEAN PATENT APPLICATION

(11) **EP 4 122 887 A1**
(43) Date of publication of application: **25.01.2023**
(21) Application number: 21382671.2
(22) Date of filing: 22.07.2021
(51) Int. Cl.: C01C 1/02, C01C 1/04

(54) **PROCESS FOR PRODUCING AMMONIA**

(71) Applicant: B. Braun Surgical, S. A., 08191 Rubi (ES); Universitat Politècnica de Catalunya, 08034 Barcelona (ES)
(72) Inventor: Turon Dois, Pau, 08191 Rubi (Barcelona) (ES); Sanz Beltran, Vanesa, 08191 Rubi (Barcelona) (ES); Aleman Llanso, Carlos Enrique, 08019 Barcelona (ES); Sans, Jordi, 08019 Barcelona (ES)
(74) Representative: Patentanwälte Ruff, Wilhelm, Beier, Dauster & Partner mbB

(57) **Abstract**

The invention refers to a process for producing ammonia comprising the step of
- contacting nitrogen and water with a catalyst comprising or consisting of permanently polarized hydroxyapatite.

## Description

### FIELD OF THE INVENTION

The present invention relates to a process for producing ammonia and to the use of the process for removing at least nitrogen (N₂) from air, i.e. atmosphere of Earth.

### BACKGROUND OF THE INVENTION

Nitrogen (N₂) fixation is challenging because the bond energy of the nitrogen-nitrogen triple bond (941 kJ/mol) supplies an extremely high thermodynamic stability.

The Haber-Bosch process is an artificial nitrogen fixation, which produces ammonia from H₂ and N₂ gases in the presence of an active catalyst. Currently, this process produces more than 90% of ammonia (L. Wang, M. Xia, H. Wang, K. Huang, C. Qian, C. T. Maravelias and G. A. Onzin, Joule, 2018, 2, 1055-1074). However, the Haber-Bosch process is an energy-intensive process. Energy consumption is due to the extremely high pressures (100-300 bars) required to increase the equilibrium concentration of ammonia at the temperatures required by the current catalytic systems (375-500 °C) (C. Smith, A. K. Hill and L. Torrente-Murciano, Energy Environ. Sci., 2020, 13, 331-344; K. H. R. Rouwenhorst, Y. Engelmann, K- van't Veer, R. S. Postma, A. Bogaerts and L. Lefferts, Green Chem., 2020, 22, 6258-6287; J. Humphreys, R. Lan and S. Tao, Adv. Energy Sustainability Res. 2021, 2, 2000043; A. J. Martin, T. Shinagawa and J. Perez-Ramirez, Chem, 2019, 5, 263-283).

Maintenance of the temperature and pressure required for the Haber-Bosch process worldwide consumes 1-2% of all energy generated by humans (E. Giamello, Nat. Chem., 2012, 4, 869-870). In addition, the Haber-Bosch process accounts for 1.4% of global CO₂ emissions (M. Capdevila-Cortada, Nat Catal 2019, 2, 1055), and thus causes massive greenhouse gas release. A further detriment is the low conversion to ammonia *(i.e.* the single-pass yield is ∼15-20%, gas recycling steps being necessary).

### OBJECT AND SOLUTION

In view of the foregoing, the object underlying the present invention is therefore to make available a process for producing ammonia which circumvents detriments, in particular as described above, in the context of conventional synthesis of ammonia, in particular in the context of the Haber-Bosch process.

This object is accomplished by a process according to independent claim 1 and by the use according to claim 15. Preferred embodiments of the process are defined in the dependent claims and the present description. The subject-matter and wording, respectively of all claims is hereby incorporated into the description by explicit reference.

The present invention relates to a process for producing or synthesizing ammonia (NH₃). The process comprises the step of
- contacting nitrogen, i.e. nitrogen gas (N₂), and water (H₂O), in particular liquid water and/or water vapor, with a catalyst comprising or consisting of permanently polarized hydroxyapatite.

Hereafter, the above step of the inventive process is denoted as "contacting step".

The present invention rests on the surprising finding that production or synthesis of ammonia from nitrogen and water in the presence of permanently polarized hydroxyapatite as catalyst or a catalyst comprising permanently polarized hydroxyapatite is achievable under mild reaction conditions (particularly < 10 bar pressure and < 250 °C temperature). Thus, for example in comparison to the Haber-Bosch process, the energy consumption may be considerably reduced, thereby facilitating production of ammonia with (considerably) lower costs. In addition, the process according to the present invention does not or basically not cause any greenhouse gas release.

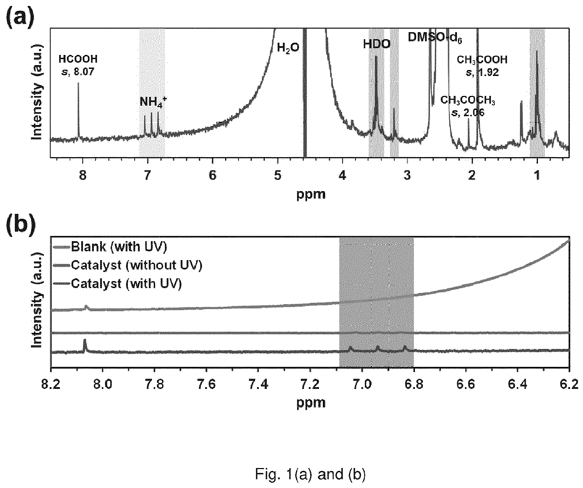

The term "permanently polarized hydroxyapatite" as used according to the present invention means a hydroxyapatite that has undergone a complete structural redistribution, in particular almost perfect, with a high crystallinity degree, i.e. particularly with a low amount of amorphous calcium phosphate and the presence of vacancies detected by increased electrochemical activity and the accumulation of charge per unit mass and surface. It has an electrochemical activity and ionic mobility which do not disappear over time. The corresponding ³¹P-NMR spectrum of the permanently polarized hydroxyapatite is as shown on fig. 1. Preferably, said spectrum is carried out with solid hydroxyapatite using phosphoric acid (H₃PO₄) as a reference and showing a unique peak at 2.6 ppm corresponding to phosphate groups of hydroxyapatite.

The term "thermally polarized hydroxyapatite" as used according to the present invention preferably means a permanently polarized hydroxyapatite obtained or obtainable by a process (thermal polarization process) comprising the steps of
(a) sintering samples comprising or consisting of hydroxyapatite (Ca₅(PO₄)₃OH or Ca₁₀(PO₄)₆OH₂) and/or amorphous calcium phosphate, in particular at a temperature between 700°C and 1200°C, and
(b) applying a constant or variable DC voltage between 250 V and 2500 V, in particular for at least 1 min and/or at a temperature between 900 °C and 1200 °C, in particular from 1000 °C to 1200 °C, or
   applying an equivalent field between 1.49 kV/cm and 15 kV/cm, in particular for at least 1 min and/or at a temperature between 900 °C and 1200 °C, in particular from 1000 °C to 1200 °C, or
   applying an electrostatic discharge between 2500 V and 1500000 V, in particular for > 0 min to 24 h, for example for less than 10 min, and/or at a temperature between 900 °C and 1200 °C, in particular from 1000 °C to 1200 °C, or
   applying an equivalent electrical field between 148.9 kV/cm and 8928 kV/cm, in particular for > 0 min to 24 h, for example for less than 10 min, and/or at a temperature between 900 °C and 1200 °C, in particular from 1000 °C to 1200 °C.

The term "samples" as used according to the present invention may in particular mean one sample, i.e. only one sample (singular), or a plurality of samples, i.e. two or more samples.

The hydroxyapatite of the samples in step (a) may be a natural, i.e. naturally occurring, hydroxyapatite and/or a synthetic hydroxyapatite.

Further, the hydroxyapatite of the samples in step (a) may be a crystalline hydroxyapatite.

Further, the samples may comprise or consist of at least one further calcium phosphate material, i.e. at least one further material comprising or consisting of calcium cations and phosphate anions. In particular, the at least one further calcium phosphate material is in the form of a calcium phosphate salt or calcium phosphate mineral. Preferably, the at least one further calcium phosphate material is selected from the group consisting of brushite (CaHPO₄ · 2H₂O or Ca[PO₃(OH)] · 2H₂O), brushite-like material, amorphous calcium phosphate, tricalcium phosphate, in particular β-tricalcium phosphate, and mixtures of at least two of the afore-said further calcium phosphate materials.

The term "brushite" as used according to the present invention means a calcium phosphate material, in particular a calcium phosphate salt or calcium phosphate mineral, preferably a synthetic calcium phosphate material, in particular synthetic calcium phosphate salt or calcium phosphate mineral, with the chemical formula CaHPO₄·2H₂O. In the WAXS (wide angle x-ray scattering) spectrum, the most representative peaks of brushite appear at 2θ = 29°, 31°, 35°, 42°, and 51°, which have been attributed to the (141), (221)̅, (121), (152)̅ and (143)̅ reflections, respectively (JCPDS card number 72-0713).

The term "brushite-like material" as used according to the present invention refers to a calcium phosphate material that shows in the Raman spectrum peaks at 878, 848 and 794 cm⁻¹, which correspond to the normal vibration mode of HPO₄²⁻, the POH deformation mode and the POH rotation mode, respectively.

The term "room temperature" as used according to the present invention means a temperature from 15 °C to 35 °C, in particular 18 °C to 30 °C, preferably 20 °C to 30 °C, more preferably 20 °C to 28 °C, particularly 20 °C to 25 °C.

In an embodiment of the invention, the permanently polarized hydroxyapatite comprises or has
- a crystallinity > 65 %, in particular > 70 %, preferably > 75 %, more preferably from 65 % to 99.9 %,
   and/or
- crystallites having a size, preferably a mean diameter, in particular determined by means of wide angle x-ray scattering (WAXS), from 20 nm to 500 nm, in particular 50 nm to 200 nm, preferably 70 nm to 100 nm,
   and/or
- a proportion of amorphous calcium phosphate < 18 % by weight, in particular from 0.1 % by weight to 17 % by weight or < 9 % by weight, preferably < 5 % by weight, in particular < 0.1 % by weight, based on the total weight of the permanently polarized hydroxyapatite,
   and/or
- a proportion of β-tricalcium phosphate < 36 % by weight, in particular from 0.1 % by weight to 35 % by weight or < 12 % by weight, preferably < 5 % by weight, in particular < 0.5 % by weight, based on the total weight of the permanently polarized hydroxyapatite,
   and/or
- a bulk resistance from 10⁷ Ω cm² to 10⁴ Ω cm², in particular 10⁷ Ω cm² to 10⁵ Ω cm², in
   particular 10⁶ Ω cm² to 10⁵ Ω cm², preferably of 10⁵ Ω cm²,
   and/or
- a surface capacitance which decreases less than 8%, in particular from 8 % to 0.1 %, preferably from 5 % to 3 %, after 3 months.

The term "bulk resistance" as used according to the present invention means resistance to the electron transfer and may be determined by means of electrochemical impedance spectroscopy.

Preferably, the bulk resistance increases by only 0.1 % to 33 %, in particular 4 % to 63 %, preferably by 4 %, after 3 months.

The term "surface capacitance" as used according to the present invention means capacitance attributed to surface changes of hydroxyapatite induced by a thermal polarization process and may be determined by means of electrochemical impedance spectroscopy.

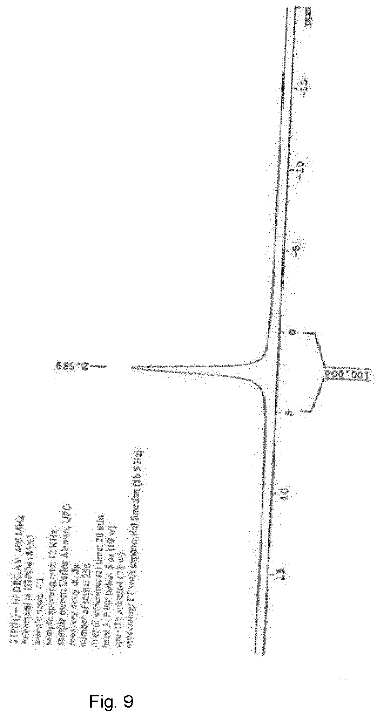

Especially preferably, the permanently polarized hydroxyapatite has a ³¹P-NMR spectrum showing a unique peak at 2.6 ppm or around 2.6 ppm, i.e. in the range of 2.5 ppm to 2.7 ppm, corresponding to phosphate groups of hydroxyapatite. Preferably, the ³¹P-NMR spectrum is carried out or obtained with solid permanently polarized hydroxyapatite at a temperature of 20 °C to 25 °C and using phosphoric acid (H₃PO₄) as a reference. A ³¹P-NMR spectrum of the permanently polarized hydroxyapatite is shown in Fig. 9.

In a further embodiment of the invention, the catalyst, in particular the permanently polarized hydroxyapatite, is obtained or obtainable by a process comprising the steps of
(a) preparing samples comprising or consisting of hydroxyapatite, in particular crystalline hydroxyapatite, and/or amorphous calcium phosphate,
(b) sintering the samples prepared in step (a), in particular at a temperature between 700 °C and 1200 °C,
(c) applying a constant or variable DC voltage between 250 V and 2500 V, in particular for at least 1 min and/or at a temperature between 900 °C and 1200 °C, in particular from 1000 °C to 1200 °C, to the samples obtained in step (b) or to shaped bodies thereof, i.e. to shaped bodies obtained from the samples obtained in step (b), or
   applying an equivalent electric field between 1.49 kV/cm and 15 kV/cm, in particular for at least 1 min and/or at a temperature between 900 °C and 1200 °C, in particular from 1000 °C to 1200 °C, to the samples obtained in step (b) or to shaped bodies thereof, i.e. to shaped bodies obtained from the samples obtained in step (b), or
   applying an electrostatic discharge between 2500 V and 1500000 V, in particular for > 0 min to 24 h, for example for less than 10 min, and/or at a temperature between 900 °C and 1200 °C, in particular from 1000 °C to 1200 °C, to the samples obtained in step (b) or to shaped bodies thereof, i.e. to shaped bodies obtained from the samples obtained in step (b), or
   applying an equivalent electrical field between 148.9 kV/cm and 8928 kV/cm, in particular for > 0 min to 24 h, for example for less than 10 min, and/or at a temperature between 900 °C and 1200 °C, in particular from 1000 °C to 1200 °C, to the samples obtained in step (b) or to shaped bodies thereof, i.e. to shaped bodies obtained from the samples obtained in step (b), and
(d) cooling the samples or shaped bodies obtained in step (c) maintaining the DC voltage or the equivalent electric field, or
   cooling the samples or shaped bodies obtained in step (c) maintaining the electrostatic discharge or the equivalent electric field, or
   cooling the samples or shaped bodies obtained in step (c) without maintaining the DC voltage or equivalent electric field or
   cooling the samples or shaped bodies obtained in step (c) without maintaining the electrostatic discharge or equivalent electric field.

The term "shaped bodies" as used according to the present invention may in particular mean one shaped body, i.e. only one shaped body (singular), or a plurality of shaped bodies, i.e. two or more shaped bodies.

The hydroxyapatite of the samples in step (a) may be a natural, i.e. naturally occurring, hydroxyapatite and/or a synthetic hydroxyapatite.

Further, the hydroxyapatite of the samples in step (a) may be a crystalline hydroxyapatite.

Further, the samples may comprise or consist of at least one further calcium phosphate material, i.e. at least one further material comprising or consisting of calcium cations and phosphate anions. In particular, the at least one further calcium phosphate material is in the form of a calcium phosphate salt or calcium phosphate mineral. Preferably, the at least one further calcium phosphate material is selected from the group consisting of brushite (CaHPO₄ · 2H₂O or Ca[PO₃(OH)] · 2H₂O), brushite-like material, amorphous calcium phosphate, tricalcium phosphate, in particular β-tricalcium phosphate, and mixtures of at least two of the afore-said further calcium phosphate materials.

The shaped bodies as used according to the present invention may have a polygonal, for example triangular, quadratic or rectangular, pentagonal, hexagonal, heptagonal, octagonal or nonagonal, cross-section or a corner-less, in particular circular, oval-shaped or elliptical, cross-section. In particular, the shaped bodies may be in the form of a disc, plate, cone (conus) or cylinder. Further, the shaped bodies may have a thickness of > 0 cm to 10 cm, in particular > 0 cm to 1 cm, preferably > 0 cm to 0.2 cm.

The aforementioned step (a) may be carried out by using ammonium phosphate dibasic (diammonium hydrogen phosphate, (NH₄)₂HPO₄) and calcium nitrate (Ca(NO₃)₂) as reactants or starting materials. In particular, the step (a) may be carried out by
(a₁) providing a mixture, in particular an aqueous mixture, preferably an aqueous-alcoholic mixture, of ammonium phosphate dibasic and calcium nitrate,
(a₂) stirring the mixture provided in step (a₁), in particular at room temperature,
(a₃) hydrothermal treating of the mixture stirred in step (a₂),
(a₄) cooling the mixture hydrothermally treated in step (a₃),
(a₅) separating precipitates obtained after cooling the mixture in step (a₄), and
(a₆) freeze-drying the precipitates separated in step (a₅) to produce hydroxyapatite, in particular crystalline hydroxyapatite.

The step (a₁) may be in particular carried out by using a mixture comprising or consisting of ammonium phosphate dibasic, calcium nitrate, water, in particular de-ionized water, ethanol, and optionally chelated calcium solutions. Advantageously, the pH value of the mixture and/or the pH value of an aqueous calcium nitrate solution applied for providing the mixture may be adjusted to 10-12, preferably 11. Thus, shapes and sizes of hydroxyapatite, in particular in the form of nanoparticles, can be controlled. Further, the step (a₂) may be carried out under agitation, in particular gentle agitation, for example applying 150 rpm to 400 rpm. Further, the step (a₂) may be carried out for 1 min to 12 h, in particular for 1 h. The step (a₂) may also be termed as an aging step, according to the present invention. Further, the step (a₃) may be carried out at a temperature of 60 °C to 240 °C, preferably of 150 °C. Further, the step (a₃) may be carried out at a pressure of 1 bar to 250 bar, preferably of 20 bar. Further, the step (a₃) may be carried out for 0.1 h to 72 h, preferably for 24 h. Further, the step (a₄) may be carried out by cooling the mixture hydrothermally treated in step (a₃) to a temperature of 0 °C to 90 °C, in particular of 25 °C. Further, the step (a₅) may be carried out by means of centrifugation and/or filtration. Further, the precipitates separated in step (a₅) may be washed, in particular using water and/or a mixture of ethanol and water, before the step (a₆) is carried out. Further, the step (a₆) may be carried out for 1 day to 4 days, in particular for 2 days to 3 days, preferably for 3 days.

Further, the aforementioned step (b) may be carried out at a temperature between 700 °C and 1150 °C, in particular between 800 °C and 1100 °C, in particular at 1000 °C.

Further, the process preferably comprises between the step (b) and the step (c) a further step (bc)
- pressing the samples obtained in step (b) to form shaped bodies or to form the shaped bodies thereof, i.e. to form the shaped bodies of the samples obtained in step (b).

In particular, the step (bc) may be carried out under a pressure of 1 MPa to 1000 MPa, in particular 100 MPa to 800 MPa, preferably 600 MPa to 700 MPa. Further, the step (bc) may be carried out for 1 min to 90 min, in particular 5 min to 50 min, preferably 10 min to 30 min.

The shaped bodies may have a polygonal, for example triangular, quadratic or rectangular, pentagonal, hexagonal, heptagonal, octagonal or nonagonal, or a corner-less, in particular circular, oval-shaped or elliptical, cross-section. Further, the shaped bodies may have a thickness of > 0 cm to 10 cm, in particular > 0 cm to 5 cm, preferably > 0 cm to 2 cm. In particular, the shaped bodies may have a thickness of 0.1 cm to 10 cm in particular 0.1 cm to 5 cm, preferably 0.5 cm to 2 cm.

Preferably, the shaped bodies are in the form of discs, plates, cones or cylinders.

Advantageously, by carrying out step (c), catalytic activation of the samples obtained in step (b) or the shaped bodies thereof may be accomplished. Preferably, step (c) is carried out by placing the samples obtained in step (b) or by placing the shaped bodies thereof between a positive electrode and a negative electrode, wherein the samples obtained in step (b) or the shaped bodies thereof are in contact with both electrodes. The positive electrode and negative electrode may, by way of example, be in the form of stainless steel plates, in particular stainless steel AISI 304 plates. Further, the positive electrode and negative electrode may have a mutual distance of 0.01 mm to 10 cm, in particular 0.01 mm to 5 cm, preferably 0.01 mm to 1 mm.

Further, the positive electrode and negative electrode can be of different shapes. The electrodes may have a polygonal cross-section, for example quadratic or rectangular, or a corner-less, in particular circular, oval-shaped or elliptical, cross-section. In particular, the electrodes may have a thickness of > 0 cm to 10 cm, in particular > 0 cm to 5 cm, preferably > 0 cm to 1 mm. For example, the electrodes may be in the form of a disc, plate or a cylinder.Further, the constant or variable DC voltage or the equivalent electric field may be applied in the aforementioned step (c) for 1 h to 24 h, in particular 0.1 h to 10 h, in particular 1 h.

Further, the DC voltage applied in the aforementioned step (c) is preferably 500 V, which is equivalent to a constant electric field of 3 kV/cm.

Further, the equivalent electric field applied in the aforementioned step (c) is preferably 3 kV/cm.

Further, the temperature in the aforementioned step (c) is preferably at least 900 °C, more preferably at least 1000 °C. Preferably, the temperature in step (c) is 900 °C to 1200 °C, in particular 1000 °C to 1200 °C, particularly 1000 °C.

Preferably, step (c) is carried out by applying a constant or variable DC voltage of 500 V at 1000 °C for 1 h to the samples obtained in step (b) or the shaped bodies, in particular discoidal shaped bodies, thereof.

Further, the aforementioned step (d) may be carried out by cooling the samples or shaped bodies obtained in step (c) to room temperature.

Further, the aforementioned step (d) may be carried out for 1 min to 72 h, in particular 15 min to 5 h, preferably 15 min to 2 h.

In a further embodiment of the invention, the catalyst, in particular the permanently polarized hydroxyapatite, is obtained or obtainable by a process comprising the steps of
(a) preparing samples comprising or consisting of hydroxyapatite, in particular crystalline hydroxyapatite, and/or amorphous calcium phosphate, in particular using ammonium phosphate dibasic (diammonium hydrogen phosphate, (NH₄)₂HPO₄) and calcium nitrate (Ca(NO₃)₂) as reactants or starting materials,
(b) sintering the samples prepared in step (a), in particular at a temperature of 1000 °C, in particular for 2 h,
(c) applying an equivalent electric field of 3 kV/cm, in particular at a temperature of 1000 °C, in particular for 1 h, to the samples obtained in step (b) or to shaped bodies thereof, i.e. to shaped bodies obtained from the samples obtained in step (b), and
(d) cooling the samples or shaped bodies obtained in step (c) maintaining the equivalent electric field, in particular for 30 min.

With respect to further features and advantages of the steps (a)-(d), reference is made in its entirety to the previous description.

With respect to further features and advantages of the permanently polarized hydroxyapatite as used according to the present invention, it is referred to the PCT application WO 2018/024727 A1, the content of which is incorporated hereby by explicit reference.

Further, the catalyst may be in the form of a single-phase catalyst or in the form of a multi-phase (multiphasic) catalyst.

Further, the catalyst, in particular a phase or single phases thereof, may preferably (along the permanently polarized hydroxyapatite) comprise or consist of at least one further calcium phosphate material, i.e. at least one further material comprising or consisting of calcium cations and phosphate anions. In particular, the at least one further calcium phosphate material may be in the form of a calcium phosphate salt or calcium phosphate mineral. Preferably, the at least one further calcium phosphate material is selected from the group consisting of brushite (CaHPO₄ · 2H₂O or Ca[PO₃(OH)] · 2H₂O), brushite-like material, amorphous calcium phosphate, tricalcium phosphate, in particular β-tricalcium phosphate, and mixtures of at least two of the afore-said further calcium phosphate salts or minerals.

Preferably, the permanently polarized hydroxyapatite has a proportion which is larger than a proportion of the at least one further calcium phosphate salt or mineral, based on the total weight of the catalyst.

In particular, the permanently polarized hydroxyapatite may have a proportion of 50 % by weight to 99.9 % by weight, in particular 65 % by weight to 99.9 % by weight, in particular 75 % by weight to 99 % by weight, preferably 80 % by weight to 95 % by weight, in particular 85 % by weight to 90 % by weight, in particular 85 % by weight to 88 % by weight, based on the total weight of the catalyst.

Further, the brushite and/or the brushite-like material may have a proportion of > 0 % by weight to 50 % by weight, in particular 0.1 % by weight to 35 % by weight, in particular 1 % by weight to 25 % by weight, preferably 5 % by weight to 20 % by weight, in particular 10 % by weight to 15 % by weight, in particular 12 % by weight to 15 % by weight, based on the total weight of the catalyst.

Further, the brushite and/or the brushite-like material may have a crystallinity, in particular determined by means of wide angle x-ray scattering (WAXS), from 65 % to 99.9 %, in particular 75 % to 99 %, preferably 80 % to 95 %. Further, crystallites of the brushite and/or the brushite-like material may have a size, in particular determined by means of wide angle x-ray scattering (WAXS), from 20 nm to 500 nm, in particular 50 nm to 200 nm, preferably 70 nm to 100 nm.

Preferably, in this context, the term "size" refers to an average diameter of the crystallites of the brushite and/or the brushite-like material. Further, the amorphous calcium phosphate may have a proportion of < 18 % by weight, in particular from 0.1 % by weight to 17 % by weight or < 9 % by weight, preferably < 5 % by weight, in particular < 0.1 % by weight, or > 0 % by weight to 15 % by weight, in particular from > 0 % by weight to 10 % by weight, preferably > 0 % by weight to 5 % by weight, based on the total weight of the catalyst.

Alternatively, the catalyst may be free of amorphous calcium phosphate.

Further, the tricalcium phosphate, in particular β-tricalcium phosphate, may have a proportion of < 36 % by weight, in particular from 0.1 % by weight to 35 % by weight or < 12 % by weight, preferably < 5 % by weight, in particular < 0.5 % by weight, or > 0 % by weight to 15 % by weight, in particular > 0 % by weight to 10 % by weight, preferably > 0 % by weight to 5 % by weight, based on the total weight of the catalyst.

Alternatively, the catalyst may be free of tricalcium phosphate, in particular β-tricalcium phosphate.

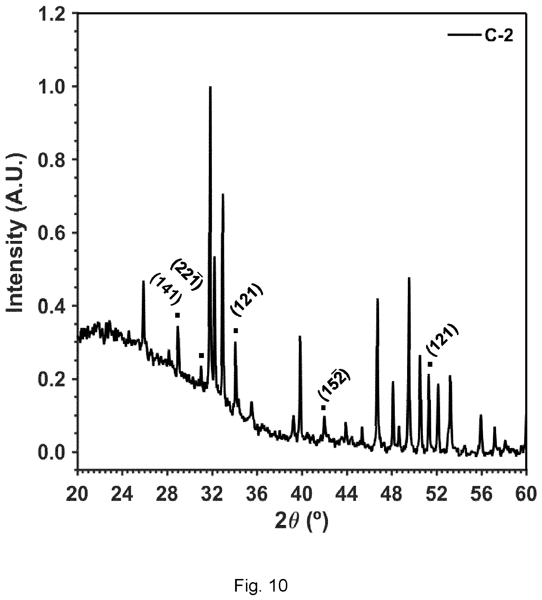

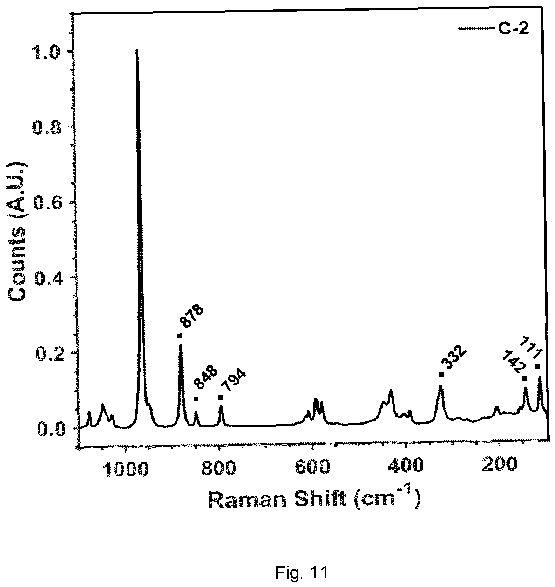

Preferably, the catalyst further, i.e. along the permanently polarized hydroxyapatite, comprises or consists of brushite and/or brushite-like material. In this case, the catalyst has preferably a wide angle x-ray scattering (WAXS) pattern showing peaks, in particular representative or unique peaks, at 2θ = 29°, 31°, 35°, 42°, and 51°, which have been attributed to the (141), (22)̅, (121), (152)̅ and (143)̅ reflections, respectively (JCPDS card number 72-0713). Preferably, said pattern is carried out or obtained at room temperature, preferably at a temperature of 20 °C to 25 °C and/or under atmospheric conditions, in particular under atmospheric humidity and/or atmospheric pressure. A wide angle x-ray scattering (WAXS) pattern of the catalyst is shown in Fig. 10. Further, the catalyst preferably has a Raman spectrum showing peaks as at 878 cm⁻¹, 848 cm⁻¹ and 794 cm⁻¹. Said peaks correspond to the normal vibration mode of HPO₄²⁻, the POH deformation mode and the POH rotation mode, respectively. Preferably, said spectrum is carried out or obtained at room temperature, preferably at a temperature of 20 °C to 25 °C and/or under atmospheric conditions, in particular under atmospheric humidity and/or atmospheric pressure, in particular recorded using a laser with a wavelength at 532 nm. A Raman spectrum of the catalyst is shown in Fig. 11. Further, the catalyst may in particular have a total catalytic activity ratio of the permanently polarized hydroxyapatite to the brushite and/or the brushite-like material of 0.5 : 2, in particular 0.75 : 1.5, preferably 0.8 : 1.25, with respect to the sum of yield of all products of a product mixture. The total catalytic activity may be preferably determined by means of ¹H-NMR (nuclear magnetic resonance) spectroscopy. For that purpose, the areas of the peaks in the ¹H-NMR spectrum are preferably normalized according to the number of the protons for each product obtained. Further, the catalyst may have a bulk resistance of 10⁷ Ω cm² to 10⁵ Ω cm², in particular 10⁷ Ω cm² to 10⁵ Ω cm², preferably 10⁵ Ω cm². In particular, the bulk resistance may increase (only) from 4 % to 33 %, in particular 4 % to 63 %, preferably 4 % after 3 months. The term "bulk resistance" as used according to the present invention means resistance to the electron transfer and may be determined by means of electrochemical impedance spectroscopy. Further, the catalyst may have a surface capacitance which decreases less than 15 %, in particular less than 8 %, after 3 months. Preferably, the composition or material may have a surface capacitance which decreases from 0 % or > 0 % to 15 %, more preferably from 0 % or > 0 % to 5 %, after 3 months.

Further, the catalyst as used according to the present invention may be in the form of particles. The particles may have a diameter, preferably mean diameter, in particular determined by means of wide angle x-ray scattering (WAXS), of 20 nm to 500 nm, in particular 50 nm to 200 nm, preferably 70 nm to 100 nm.

Further, the catalyst as used according to the present invention may be in the form of a powder, in particular having particles as mentioned in the preceding paragraph.

Further, the catalyst as used according to the present invention may be in the form of a shaped body. The shaped body may have a polygonal, for example triangular, quadratic or rectangular, pentagonal, hexagonal, heptagonal, octagonal or nonagonal, cross-section or a corner-less, in particular circular, oval-shaped or elliptical, cross-section.

In particular, the shaped body may be in the form of a disc, plate, cone (conus) or cylinder.

Further, the shaped body may have a thickness of > 0 cm to 10 cm, in particular > 0 cm to 1 cm, preferably > 0 cm to 0.2 cm.

Further, the catalyst may be obtained or obtainable by a process comprising the steps of
(a) providing samples comprising or consisting of hydroxyapatite, in particular natural or synthetic hydroxyapatite, and/or amorphous calcium phosphate,
(b) sintering the samples provided in step (a),
(c) applying a constant or variable DC voltage between 250 V and 2500 V, in particular for at least 1 min and/or at a temperature between 900 °C and 1200 °C, in particular from 1000 °C to 1200°C, to the samples obtained in step (b) or to shaped bodies thereof, i.e. to shaped bodies obtained from the samples obtained in step (b) or
   applying an equivalent electric field between 1.49 kV/cm and 15 kV/cm, in particular for at least 1 min and/or at a temperature between 900 °C and 1200 °C, in particular from 1000 °C to 1200°C, to the samples obtained in step (b) or to shaped bodies thereof, i.e. to shaped bodies obtained from the samples obtained in step (b) or
   applying an electrostatic discharge between 2500 V and 1500000 V, in particular for > 0 min to 24 h and/or at a temperature between 900 °C and 1200 °C, in particular from 1000 °C to 1200°C, to the samples obtained in step (b) or to shaped bodies thereof, i.e. to shaped bodies obtained from the samples obtained in step (b) or
   applying an equivalent electric field between 148.9 kV/cm and 8928 kV/cm, in particular for > 0 min to 24 h and/or at a temperature between 900 °C and 1200 °C, in particular from 1000 °C to 1200°C, to the samples obtained in step (b) or to shaped bodies thereof, i.e. to shaped bodies obtained from the samples obtained in step (b) and
(d) cooling the samples or shaped bodies obtained in step (c) maintaining the DC voltage or the equivalent electric field, or
   cooling the samples or shaped bodies obtained in step (c) maintaining the electrostatic discharge or the equivalent electric field, or
   cooling the samples or shaped bodies obtained in step (c) without maintaining the DC voltage or equivalent electric field or
   cooling the samples or shaped bodies obtained in step (c) without maintaining the electrostatic discharge or equivalent electric field.
   wherein, for performing step (c), the samples obtained in step (b) or the shaped bodies thereof are arranged between a positive electrode and a negative electrode, which are used for applying the constant or variable DC voltage, equivalent electric field or electrostatic discharge during step (c), such that the samples obtained in step (b) or the shaped bodies thereof are spaced from one of the two electrodes, preferably from the positive electrode, i.e. such that the samples obtained in step (b) or the shaped bodies thereof have a distance to one of the two electrodes, preferably to the positive electrode.

Preferably, for performing step (c), the samples obtained in step (b) or the shaped bodies thereof are arranged between the positive electrode and the negative electrode, which are used for applying the constant or variable DC voltage, equivalent electric field or electrostatic discharge during step (c), such that the samples obtained in step (b) or the shaped bodies thereof are spaced only from one of the two electrodes, preferably only from the positive electrode, i.e. such that the samples obtained in step (b) or the shaped bodies thereof have a distance only to one of the two electrodes, preferably only to the positive electrode. In other words, the samples obtained in step (b) or the shaped bodies thereof are preferably left in contact with the other of the two electrodes, more preferably with the negative electrode.

Further, the samples obtained in step (b) or the shaped bodies thereof are spaced from the one of the two electrodes, preferably from the positive electrode, in a distance from > 0 cm to 10 cm, in particular > 0 cm to 5 cm, preferably > 0 cm to 0.1 cm.

With respect to further features and advantages of the electrodes, reference is made in its entirety to the previous description.

Further; the hydroxyapatite of the samples in step (a) may be a natural, i.e. naturally occurring, hydroxyapatite and/or a synthetic hydroxyapatite.

Further, the hydroxyapatite of the samples in step (a) may be a crystalline hydroxyapatite.

Further, the samples may comprise or consist of at least one further calcium phosphate material, i.e. at least one further material comprising or consisting of calcium cations and phosphate anions. In particular, the at least one further calcium phosphate material is in the form of a calcium phosphate salt or calcium phosphate mineral. Preferably, the at least one further calcium phosphate material is selected from the group consisting of brushite (CaHPO₄ · 2H₂O or Ca[PO₃(OH)] · 2H₂O), brushite-like material, amorphous calcium phosphate, tricalcium phosphate, in particular β-tricalcium phosphate, and mixtures of at least two of the afore-said further calcium phosphate materials.

With respect to further features and advantages of the process, reference is made in its entirety to the previous description and to the applicants' non-published European patent application EP 20383003.9.

Preferably, the water or at least an amount or proportion of the water is in liquid form during the contacting step. Depending on the reaction conditions applied for carrying out the contacting step, in particular dependent on the applied pressure, in particular nitrogen pressure, and/or applied temperature, an amount or proportion of the water may be also in vapor form during the contacting step.

In a further embodiment of the invention, the contacting step is carried out with a volumetric ratio of the water to the catalyst of 10000 : 1 to 0.1 : 1, in particular 1000 : 1 to 0.1 : 1, preferably 1000 : 1 to 100 : 1.

Further, the contacting step may be carried out with a weight ratio of the water to the catalyst of 10000 : 3 to 0.1 : 3, in particular 1000 : 3 to 0.1 : 1, preferably 1000 : 3 to 100 : 3.

Further, the contacting step may be carried out by using a proportion of the water of 0.1 % by weight to 99.97 % by weight, in particular 0.1 % by weight to 99.9% by weight, preferably 0.1 % by weight to 99.7 % by weight, more preferably 97 % by weight to 99.7 % by weight, based on a total weight of a mixture comprising or consisting of the water and the catalyst.

Preferably, the contacting step is carried out in a chamber, in particular inert chamber, of a reactor.

Further, the contacting step may be carried out by using a ratio of water volume to a volume of the chamber of 1 to 1000, in particular 1 to 100, preferably 1 to 10.

Further, the contacting step may be carried out by using a proportion of the catalyst of 0.03 % by weight to 99.9 % by weight, in particular 0.3 % by weight to 99.9 % by weight, preferably 0.3 % by weight to 3 % by weight, based on a total weight of a mixture comprising or consisting of the water and the catalyst.

In a further embodiment of the invention, the contacting step is carried out under a pressure, in particular under a pressure of nitrogen, of 0.01 bar to 20 bar, preferably 0.3 bar to 10 bar, more preferably 1 bar to 10 bar, in particular of 6 bar.

In a further embodiment of the invention, the contacting step is carried out with a molar ratio of nitrogen to the catalyst of 400 to 20, preferably 200 to 60, in particular 120.

In a further embodiment of the invention, the contacting step is carried out at a temperature of ≥ 95 °C to 140 °C, preferably ≥ 95 °C to 120 °C, more preferably 100 °C to 120 °C, in particular of 120 °C.

In a further embodiment of the invention, the contacting step is carried out for 0.0001 h to 120 h, in particular 0.1 h to 96 h, preferably 24 h to 72 h.

Further, the catalyst may be in the form of an uncoated catalyst, i.e. in the form of a catalyst lacking any coating.

Alternatively, the catalyst may be in the form of a coated catalyst. For example, the catalyst may be coated with a material, in particular a photocatalytic active material, such as TiO₂, MgO₂, MnO₂ or combinations thereof. More specifically, the catalyst may be coated with a coating having a three-layer structure, in particular wherein the three-layer structure may be composed of two layers of aminotris (methylenephosphonic acid) and a layer of zirconium oxychloride (ZrOCl₂) or zirconia (ZrO₂), wherein the layer of zirconium oxychloride (ZrOCl₂) or zirconia (ZrO₂) is arranged or sandwiched between the two layers of aminotris (methylenephosphonic acid). By using a coated catalyst, the efficiency of the process according to the present invention may be additionally optimized.

Further, the catalyst may be doped with an additive. The additive may be in particular in the form of nanoparticles, i.e. of particles having a mean pore diameter of 1 nm to 100 nm. Further, the additive may be selected from the group consisting of a metal, a ceramic, an organic compound and combinations thereof. The metal may be selected from the group consisting of gold, silver, copper, zinc, titanium and combinations, in particular alloys, thereof. The ceramic may be selected from the group consisting of inorganic, non-metallic, often crystalline oxide, nitride, or carbide material, in particular phosphates, silicates and combinations thereof.

In a further embodiment of the invention, the contacting step is carried out under UV (ultraviolet) irradiation or UV-Vis (ultraviolet-visible) irradiation. In particular, the UV irradiation or UV-Vis irradiation may have a wavelength from 200 nm to 850 nm, in particular 240 nm to 400 nm, in particular 200 nm to 280 nm, preferably 240 nm to 270 nm, more preferably 250 nm to 260 nm, especially preferably of 253.7 nm. The UV irradiation or UV-Vis irradiation may be provided or generated by a suitable UV source or UV-Vis source, for example UV lamp or UV-Vis lamp.

In a further embodiment of the invention, the UV irradiation or UV-Vis irradiation has an irradiance from 0.1 W/m² to 200 W/m², in particular 1 W/m² to 50 W/m² preferably 2 W/m² to 10 W/m², more preferably of 3 W/m².

In a further embodiment of the invention, a surface of the catalyst is exposed to the UV irradiation or UV-Vis irradiation, wherein the surface of the catalyst being exposed to the UV irradiation or UV-Vis irradiation is not covered by the water.

Further, the contacting step may be carried out in absence or basically in absence of carbon dioxide.

The term "basically in absence of carbon dioxide" as used according to the present invention means absence of free carbon dioxide (without considering the presence of physically and/or chemically absorbed carbon dioxide, in particular on inner walls of a reactor in which the contacting step may be carried out).

Further, the contacting step may be carried out in absence or basically in absence of methane.

The term "basically in absence of methane" as used according to the present invention means absence of free methane (without considering the presence of physically and/or chemically absorbed methane, in particular on inner walls of a reactor in which the contacting step may be carried out).

Further, the contacting step may be carried out in absence or basically in absence of carbon dioxide and methane.

In a further embodiment of the invention, the contacting step is carried under an atmosphere which is, apart from the nitrogen and optionally water vapor, free or basically free of any further gas. In other words, in a further embodiment of the invention, apart from nitrogen, no or basically no further gas is applied during the contacting step.

The term "basically free of any further gas" or "basically no further gas" as used according to the present invention means absence of free further gas (without considering the presence of physically and/or chemically absorbed further gas, in particular on inner walls of a reactor in which the contacting step may be carried out).

In a further embodiment of the invention, the contacting step is carried out by using air, in particular polluted air, preferably industrial and/or traffic polluted air, wherein the nitrogen is part of the air.

The term "air" as used according to the present invention means a layer of gases retained by Earth's gravity, surrounding the planet's Earth and forming its planetary atmosphere (so-called "atmosphere of Earth").

The term "polluted air" as used according to the present invention means air comprising gaseous pollutants. The pollutants are preferably selected from the group consisting of carbon dioxide, methane, nitrogen dioxide, ozone, nitrogen oxides, sulfur dioxide, gases containing sulphur, cyanides, volatile organic carbon compounds (VOC) and mixtures of at least two of the afore-said gaseous pollutants.

The term "industrial and/or traffic polluted air" as used according to the present invention means air comprising gaseous pollutants, wherein the gaseous pollutants come from traffic, in particular motor vehicle traffic and/or rail transport and/or shipping and/or air traffic, and/or from industrial plants. As regards possible gaseous pollutants, reference is made in its entirety to the previous paragraph.

Further, the process, in particular the contacting step, according to the present invention may be carried out in continuous, semi-continuous or batch-like manner.

Preferably, the process comprises a further step
- extracting the ammonia, in particular from the catalyst and/or water. For example, the ammonia may be extracted by dissolving the catalyst in water, in particular in water with a pH of 1.5 to 2.5, preferably 1.9 to 2.3, and in particular using an acid, preferably sulfuric acid (H₂SO₄), for example 7.6 mM sulfuric acid. Thus, the conversion of ammonia to ammonium (NH₄) may be promoted.

Further, the present invention relates to the use of the process according to the present invention for removing carbon dioxide and/or nitrogen, preferably carbon dioxide and nitrogen, from air, in particular polluted air, preferably industrial and/or traffic polluted air.

With respect to further features and advantages of the use, reference is made in its entirety to the previous description.

Further features and advantages of the invention will become clear from the following examples in conjunction with the subject-matter of the dependent claims. The individual features can be realized either singularly or severally in combination in one embodiment of the invention. The preferred embodiments merely serve for illustration and better understanding of the invention and are not to be understood as in any way limiting the invention.

Further features and advantages of the invention will become clear from the following examples in conjunction with the subject-matter of the dependent claims. The individual features can be realized either singularly or severally in combination in one embodiment of the invention. The preferred embodiments merely serve for illustration and better understanding of the invention and are not to be understood as in any way limiting the invention.

### DESCRIPTION OF THE FIGURES

For a better understanding of what has been disclosed, some figures are attached which schematically or graphically and solely by way of non-limiting example show a practical case of embodiment of the present invention.

### BRIEF DESCRIPTION OF THE FIGURES

In the figures, the following is schematically displayed:
**Figure 1****.** (a) ¹H NMR analysis in DMSO-*d₆* of the p-HAp catalyst dissolved, after 96 h of reaction, in 15 mL of water with pH adjusted to 2.1 ± 0.2 using 7.6 mM H₂SO₄. The reaction was conducted using 6 bar of N₂, 20 mL of de-ionized water in contact with the surface, 120 °C and UV illumination. The triplet associated to the ammonium is lighted by the orange rectangle, the HDO peak is shown in the green, and the products coming from the degradation of DMSO-*d₆* are marked in violet. The products coming from CO₂ adsorbed on the perfluorinated coating are also indicated (labels show the shift in ppm). (b) ¹H NMR analyses in DMSO-*d₆* of: the supernatant after reaction using the same conditions that in (a) but without p-HAp catalyst (blank; in grey). A total 15 mL of water with pH adjusted to 2.1 ± 0.2 using 7.6 mM H₂SO₄ were previously added to detect the possible formation of NH₄⁺; the p-HAp catalyst dissolved, after reaction, in 15 mL of water with pH adjusted to 2.1 ± 0.2 using 7.6 mM H₂SO₄. The reaction conditions were identical to those described in (a) but without UV illumination (catalyst without UV, in red); and (c) the same catalyst analyzed in (a), as a positive control (catalyst with UV radiation, in blue).

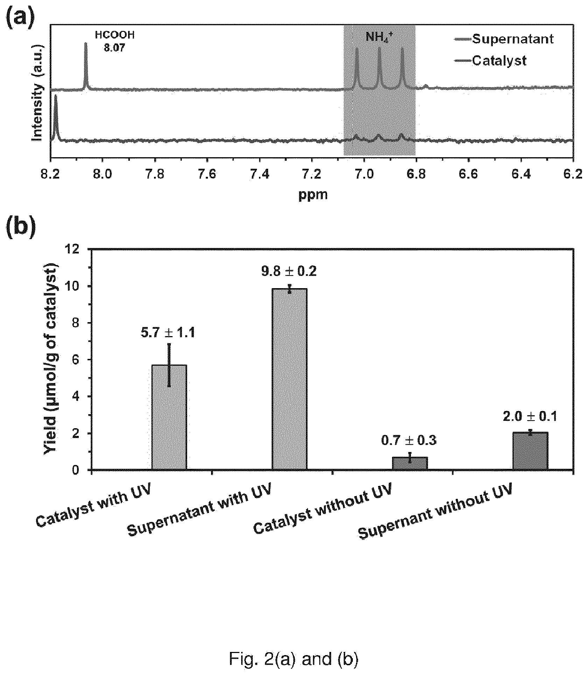

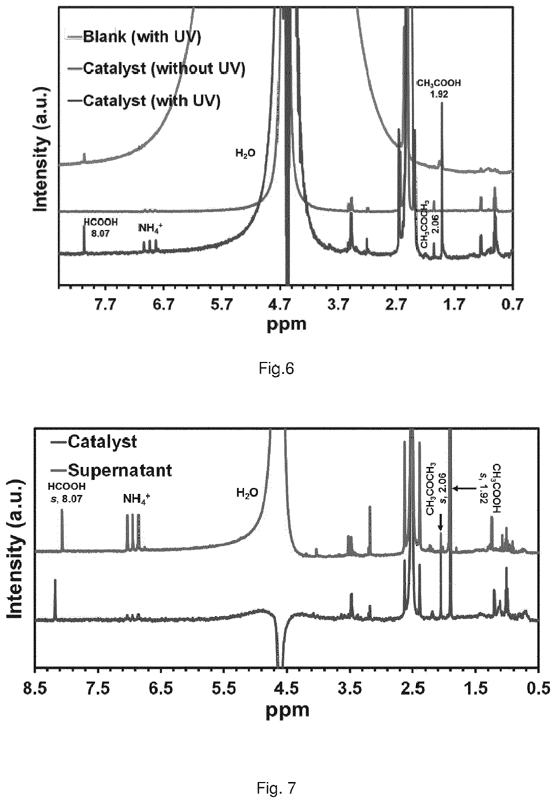

**Figure 2****.** (a) ¹H NMR spectrum in DMSO-*d₆* of the supernatant, to which 15 mL of water with pH adjusted to 2.1 ± 0.2 using 7.6 mM H₂SO₄ were added to visualize the NH₄⁺, and of the p-HAp catalyst dissolved in the same H₂SO₄ solution after 96 h of reaction under UV illumination. The triplet associated to the ammonium formation is marked (light orange rectangle). Complete spectra (including the products coming from the adsorbed CO₂ reaction) are shown in Figure 7. (b) Yield of NH₄⁺ (expressed in µmol / g of catalyst) in the catalyst and in the supernatant after the reaction with and without UV illumination. For (a) and (b) the reaction was conducted for 96 h at 120 °C using N₂ (6 bar) and H₂O (20 ml).

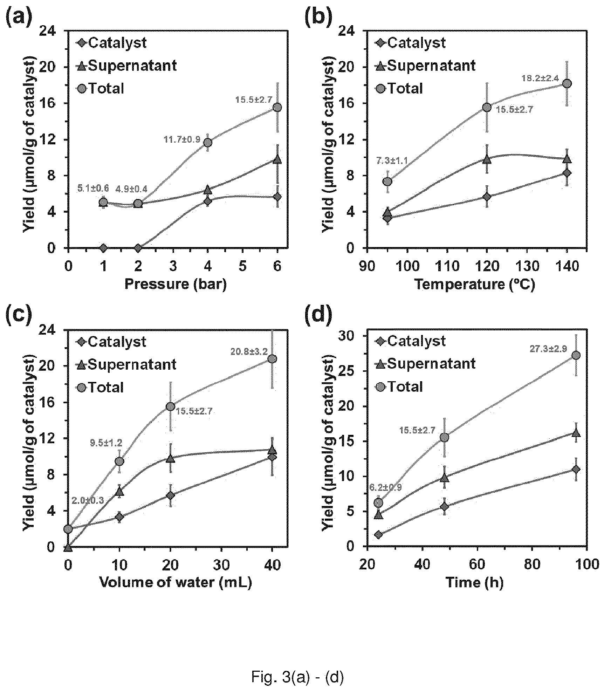

**Figure 3****.** Influence of the (a) N₂ pressure, (b) the temperature, (c) the initial volume of water and the (d) reaction time on the yield of NH₄⁺. Results were evaluated by analyzing the ¹H NMR spectrum of the p-HAp catalyst dissolved in H₂SO₄ solution with DMSO-*d₆* and the ¹H NMR spectrum of the supernatant, to which a H₂SO₄ solution with DMSO-*d₆* was added to visualize the NH₄⁺. The total yield of NH₄⁺ (expressed in µmol / g of catalyst) corresponds to the sum of the yields derived from the catalyst and the supernatant. All reactions were performed in triplicate under UV radiation. Reactions were conducted under the following conditions: (a) reaction time of 48 h, temperature of 120 °C and initial water volume of 20 mL; (b) reaction time of 48 h, N₂ pressure of 6 bar and initial water volume of 20 mL; (c) reaction time of 48 h, N₂ pressure of 6 bar and temperature of 120 °C; and (d) N₂ pressure of 6 bar, temperature of 120 °C and initial water volume of 20 ml.

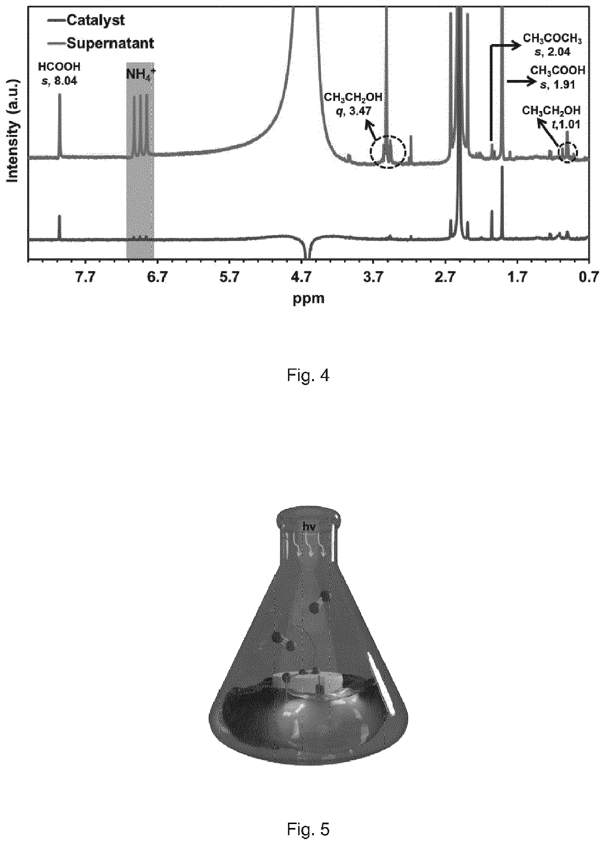

**Figure 4****.** ¹H NMR spectrum in DMSO-*d₆* of (a) the catalyst and (b) the supernatant after 96 h of reaction of polluted air. The catalyst was dissolved in 15 mL of water with pH adjusted to 2.1 ± 0.2 using 7.6 mM H₂SO₄, while the same volume of solution was added to the supernatant. The reaction was conducted at atmospheric pressure at 120 °C using water (20 mL) and under UV illumination. The triplet associated to the ammonium formation is marked (light orange rectangle).
**Figure 5**. Sketch showing that de-ionized water was not covering the p-HAp catalyst and the migration of the formed ammonia molecular towards the liquid.
**Figure 6****.** ¹H NMR spectrum of the supernant (water) in the reaction without catalyst under UV radiation (blank reaction; in grey), the p-HAp/c catalyst dissolved in H₂SO₄ solution with DMSO-*d₆* after the reaction without UV radiation (control reaction; in red), and the p-HAp/c catalyst dissolved in H₂SO₄ solution with DMSO*-d₆* after the reaction under UV radiation (standard reaction; in blue). In all cases the reaction was conducted for 96 h at 120 °C using N₂ (6 bar) and H₂O (20 ml).
**Figure 7****.** ¹H NMR spectrum of the supernatant, to which a H₂SO₄ solution with DMSO-*d₆* was added to visualize the 1 : 1 : 1 triplet from NH₄⁺, and of the p-HAp/c catalyst dissolved in H₂SO₄ solution with DMSO-*d₆* after the reaction under UV radiation. The reaction was conducted for 96 h at 120 °C using N₂ (6 bar) and H₂O (20 ml).

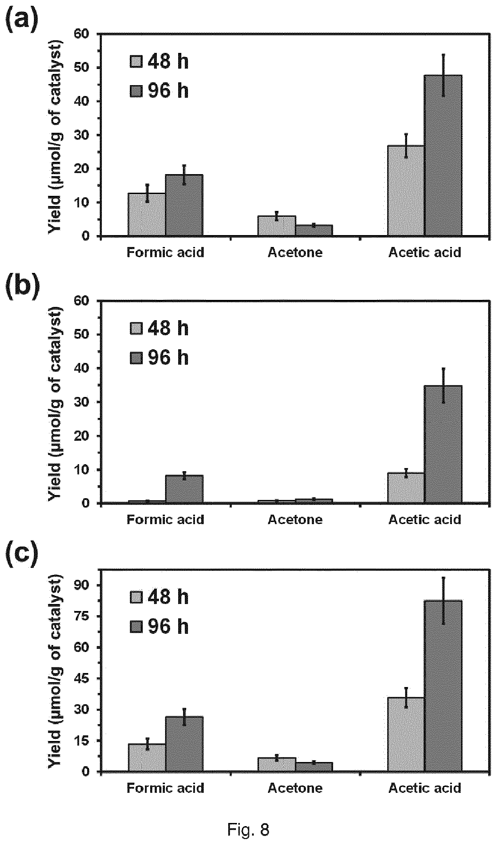

**Figure 8****.** Yield of formic acid, acetone and acetic acid (expressed in µmol / g of catalyst) in the catalyst (a), in the supernatant (b) and the sum of both (c). The yield of the products coming from the desorption of CO₂ was evaluated for reactions conducted for 48 or 96 h at 120 °C using N₂ (6 bar) and H₂O (20 ml) under UV illumination.
**Figure 9****.** A ³¹P-NMR spectrum of permanently polarized hydroxyapatite.
**Figure 10****.** A wide angle x-ray scattering (WAXS) pattern of an inventive catalyst comprising or consisting of permanently polarized hydroxyapatite and brushite and/or brushite-like material.
**Figure 11****.** A Raman spectrum of an inventive catalyst comprising or consisting of permanently polarized hydroxyapatite and brushite and/or brushite-like material.

### EXAMPLE SECTION

### 1. Synthesis of hydroxyapatite (HAp)

15 mL of 0.5 M of (NH₄)₂HPO₄ in de-ionized water were added at a rate of 2 mL/min to 25 mL of 0.5 M of Ca(NO₃)₂ in ethanol (with pH previously adjusted to 11 using ammonium hydroxide solution) and left aging for 1 h. The whole process was performed under gentle agitation (150 rpm) and at room temperature. Hydrothermal treatment at 150 °C was applied using an autoclave Digestec DAB - 2 for 24h. The autoclave was allowed to cool down before opening. The precipitates were separated by centrifugation and washed with water and a 60/40 v/v mixture of ethanol - water (twice). After freeze - drying it for 3 days, the white powder obtained was sintered for 2 h at 1000 °C in air using the Carbolite ELF11/6B/301 furnace.

### 2. Polarization of hydroxyapatite (HAp)

Mechanical consistent discs of ∼1.5 mm of thickness and 1.766 mm of diameter were obtained by pressing 150 mg of HAp powder at 620 MPa for 10 min in a mold. Thermal polarization was done placing the HAp discs between two stainless steel (AISI 304) and applying a constant DC voltage conducted by Pt cables of 500 V for 1 h with a GAMMA power supply, while temperature was kept at 1000 °C during such a period using the same laboratory furnace. The discs were allowed to cool down maintaining the applied electric potential for 30 minutes, and finally, all the system was powered off and left to cool overnight.

### 3. Synthesis

A high pressure stainless steel reactor was employed to perform the catalytic reactions. The reactor had an inert reaction chamber coated with a perfluorinated polymer (120 mL) where both the catalyst and water were incorporated. The reactor was equipped with an inlet valve for the entrance of gases (*i.e.* N₂) and an outlet valve to recover the gaseous reaction products. A UV lamp (GPH265T5L/4, 253.7 nm) was also placed in the middle of the reactor to irradiate the catalyst directly, the lamp being protected by a UV transparent quartz tube. All surfaces were coated with a thin film of a perfluorinated polymer in order to avoid any contact between the reaction medium and the reactor surfaces, in this way discarding other catalyst effects.

Catalyst samples, weighting approximately 150 mg, and de-ionized liquid water were initially incorporated into the reaction chamber. The chamber was extensively purged with N₂ in order to eliminate the initial air content. After this, N₂ gas was introduced to increase the reaction chamber pressure (measured at room temperature) to the target pressure.

The reaction products were analyzed by ¹H NMR spectroscopy. All ¹H NMR spectra were acquired with a Bruker Avance-II+ spectrometer operating at 600 MHz. The chemical shift was calibrated using tetramethylsilane (TMS) internal standard. 512 scans were recorded in all cases. In order to remove the reaction products from the catalyst, 10 mg of the reacted catalyst were dissolved in 15 mL of water with pH adjusted to 2.1 ± 0.2 using 7.6 mM H₂SO₄, to promote the conversion of ammonia in NH₄⁺, and applying 4 cycles that involved sonication (5 min) and stirring (1 min) steps. Then, for the ¹H NMR sample preparation, 500 µL of the reacted catalyst solution were mixed with 100 µL of DMSO-*d₆* instead of solvents with labile deuterons (*i.e.* D₂O) to avoid the formation of ammonium deuterated analogues, not desired for quantitative analysis. The same treatment was applied to the water supernatant.

### 4. N₂ fixation to ammonia

The p-HAp electrocatalyst was prepared as described in previous work (J. Sans, E. Armelin, V. Sanz, J. Puiggalí, P. Turon and C. Alemán, J. Catal., 2020, 389, 646-656; J. Sans, V. Sanz, J. Puiggalí and P. Turon, Cryst. Growth Des. 2021, 21, 748-756). In brief, after hydrothermal synthesis of HAp using a recently proposed procedure to control the anisotropic growth, the resulting powder was sintered at 1000 °C. Then, discs of ∼1.5 mm thickness and 1.766 mm diameter were obtained by pressing in a mold. Then, the discs were polarized applying a DC voltage of 500 V for 1 h at 1000 °C.

In order to investigate the electrocatalytic synthesis of ammonia over p-HAp, a reaction was performed at 120 °C in a stainless steel reactor with an inert reaction chamber *(i.e.* a chamber coated with a perfluorinated polymer) illuminated with UV light. In order to eliminate the initial air content, the chamber was firstly purged with the N₂ and, subsequently, filled with N₂ (6 bar). A volume of 20 mL of de-ionized water was introduced in the reactor and put in contact with the non-irradiated side of the p-HAp disk, as is sketched in Figure 5. This represents a significant change with respect to previous carbon-fixation reactions using p-HAp, in which 1 mL of water was put in contact with the catalyst to promote the electro-reduction of CO₂ (M. Rivas, L. J. del Valle, P. Turon, C. Alemán and J. Puiggalí, Green Chem., 2018, 20, 685-693). In the present study, water was expected to act not only as the proton source for the ammonia formation (from water splitting) but also a medium to facilitate the recovery of the formed products (hereafter named *"supernatant"*) and, therefore, the volume of liquid was noticeably increased.

The products generated on the surface of the p-HAp disk after 96 h of reaction were identified adapting a procedure for rapid NH₄⁺ analyses using ¹H NMR spectroscopy (R. Y. Hodgetts, A. S. Kiryutin, P. Nichols, H.-L. Du, J. M. Bakker, D. R. Macfarlane and A. N. Simonov, ACS Energy Lett., 2020, 5, 736-741). More specifically, 10 mg of the reacted catalyst were dissolved in 15 mL of water with pH adjusted to 2.1 ± 0.2 using 7.6 mM H₂SO₄, to promote the conversion of ammonia in NH₄⁺, and applying 4 cycles that involved sonication (5 min) and stirring (1 min) steps. Then, for the ¹H NMR sample preparation, 500 µL of the reacted catalyst solution were mixed with 100 µL of DMSO-*d₆*. As is illustrated in Figure 1a, in addition of the characteristic DMSO-*d₆* and H₂O signals, the ¹H NMR collected using this procedure showed in all cases the HDO fingerprint at 3.49 ppm, coming from the proton exchange with deuterium in acid environment (green rectangle in Figure 1a) (G. Fulmer, A. J. M. Miller, N. H. Sherden, H. E. Gottlieb, A. Nudelman, B. M. Stoltz, J. E. Bercaw, K. I. Goldberg, Organometallics, 2010, 29, 2176-2179). Furthermore, the signals at 1.01 and 3.18 pm (violet rectangle in Figure 1a), which are systematically detected, have been attributed to degradation products (*i.e.* ^{•}CH₃ and methanesulfonic acid, respectively) from the oxidation of DMSO-*d₆* by electroactive species coming from the catalyst (S. Enami, Y. Sakamoto, K. Hara, K. Osada, R. M. Hoffmann and J. A. Colussi, Environ. Sci. Technol., 2016, 50, 1834-1843; S. Mukhopadhyay, M. Zerella and T. A. Bell, Stud. Surf. Sci. Catal., 2004, 147, 523-528). Figure 1a allows to detect the presence of ammonium at around 7 ppm as a relatively sharp 1 : 1 : 1 NH₄⁺ triplet due to the spin coupling to ¹⁴N. Quantification of NH₄⁺ (11.0 ± 1.6 µmol / g of catalyst) was performed by integrating the 1 : 1 : 1 triplet against the signal of a known concentration of NH₄⁺ as internal standard.

Other products coming from CO₂ fixation were also identified in the ¹H NMR spectrum: formic acid (8.07 ppm), acetone (2.06 ppm) and acetic acid (1.92 ppm). Although p-HAp was found to catalyze the electroreduction of CO₂, the source of such gas in the reaction chamber was initially uncertain. After different tests aimed at having an exhaustive purge of the reactor chamber, ensuring the elimination of gases other than N₂, and several blank and control reactions, it was concluded that the CO₂ adsorbed by the perfluorinated polymer, which coated all surfaces of the reaction chamber, was the source for the carbon-fixation reaction. Thus, although the yield of NH₄⁺ was null in absence of catalyst (blank reaction) and very low (1.3 ± 0.5 µmol / g) when the p-HAp was not irradiated with UV light (control reaction), weak signals associated to formic acid, acetone and acetic acid were still detectable in the former case while they were not detected in the latter one (Figures 1b and Figure 6). Fluorinated polymers are known to be *"CO₂-philic"* materials due to the affinity of strong polar C-F bonds towards the CO₂ molecule (G. Li, B. Zhang and Z. Wang, Macromolecules, 2016, 49, 2575-2581; Y. F. Zhao, K. X. Yao, B. Y. Teng, T. Zhang and Y. Han, Energy Environ. Sci., 2013, 6, 3684-3692; D. P. Liu, Q. Chen, Y. C. Zhao, L. M. Zhang, A. D. Qi, B. H. Han, ACS Macro Lett., 2013, 2, 522-526; J. J. Reisinger and M. A. Hillmyer, Prog. Polym. Sci., 2002, 27, 971-1005), results suggesting that the desorption of the gas absorbed on the perfluorinated coating under UV irradiation at 120 °C.

An important aspect to be considered is the transfer of the ammonia molecules formed on the surface of the catalyst to the water medium, which is in contact with the p-HAp disk (Figure 5). In order ascertain the presence of ammonia in the liquid, 15 mL of water with pH adjusted to 2.1 ± 0.2 using 7.6 mM H₂SO₄ were added to the supernatant before to collect the ¹H NMR spectrum. Comparison of the ¹H spectra recorded for the supernatant and the dissolved catalyst revealed that the ammonium triplet is more intense in the former than in the latter (Figure 2a). Indeed, the yield was 70% higher in the supernatant than in the dissolved catalyst. This is reflected in Figure 2b, which compares the yield of ammonium in the dissolved catalyst and in the supernatant with those achieved using control experiments without UV illumination. Without UV light, the effective barrier of the p-HAp is too high, incident UV illumination being required to overcome the activation energy barrier for nitrogen-fixation. These results have important implications not only in extracting the produced ammonia, which can be directly removed from the liquid phase, but also in preventing the catalyst poisoning by accumulation of ammonia. Besides, peaks associated to the CO₂ fixation were also detected in the supernatant, as is evidenced in Figure 7.

Analyses of the supernatants have been also used to study the influence of the reaction time in the yield of products coming from desorbed CO₂ fixation. Results are displayed in Figure 8, which compares the yield of formic acid, acetone and acetic acid in the p-HAp catalyst, in the supernatant and the sum both, after 48 and 96 h of reaction using 6 bar of N₂ at 120 °C and under UV illumination. The increment of the reaction time had a huge impact in the CO₂ fixation reaction, which was particularly noticeable in the formic and acetic acids *(i.e.* the yield increased by around 97% and 130%, respectively). Thus, the total yield of carbon-based valuable products increased from 55.9 ± 8.5 to 113.2 ± 15.6 µmol/g of catalyst when the reaction time expanded from 48 to 96 h. Overall, these results show that desorption of the CO₂ molecules from the perfluorinated coating and their subsequent conversion into value organic products occur progressively.

### 5. Influence of the pressure, temperature, water volume and time on the yield of ammonia

The influence of different factors on the yield of ammonia is described in Figure 3. In all cases reactions were conducted using the p-HAp electrocatalyst and under UV illumination. Firstly, experiments were performed by changing the initial N₂ pressure from 1 to 6 bar while the temperature and the initial content of water were kept at 120 °C and 20 mL, respectively. After 48 h of reaction, it can be seen that the yield of NH₄⁺ increased with the N₂ pressure (Figure 3a). Indeed, the amount of produced NH₄⁺ that adsorbed by the catalyst is practically null for reactions with a pressure ≤ 2 bar. Above such pressure the total yield increased rapidly, even though the adsorption on the p-HAp catalyst stabilizes at 4 bar.

Another important factor that deserves consideration is the reaction temperature. This was varied from 95 to 140 °C (Figure 3b), while the N₂ pressure, the initial content of water and the reaction time were kept at 6 bar, 20 mL and 48 h, respectively. Although the yield of NH₄⁺ on the catalyst increased with the temperature, the ammonium collected in the supernatant at 120 °C and 140 °C was practically identical (*i.e.* 9.8 ± 1.5 and 9.9 ± 1.0 µmol/g of catalyst, respectively). Consequently, the total yield of synthesized NH₄⁺ experienced a drastic enhancement (112%) when the reaction temperature was increased from 95 °C to 120 °C, whereas such increment was very low (16% only) when it was changed from 120 °C to 140 °C. These results indicate that, although the nitrogen fixation reaction induced by the p-HAp catalyst operates at temperatures higher than the fixation promoted by Nitrogenase in nature (ambient temperature), the required temperature is much lower than that applied in the Haber-Bosch process (375-500 °C).

The volume of water introduced in the reactor, which is the source of protons for NH₄⁺ production, is a key parameter that deserves consideration. Reactions were conducted considering 0, 10, 20 and 40 mL of water in contact with the p-HAp catalyst (see Figure 5). In absence of water, the amount of NH₄⁺ extracted from the catalyst was practically null (Figure 3c). In this case, the total yield (2.0 ± 0.3 µmol/g of catalyst) was attributed to the adsorption of water from the atmosphere on the catalyst during its manipulation. Thus, water contact angle measurements showed that p-HAp is a very hydrophilic material (M. Rivas, L. J. del Valle, E. Armelin, O. Bertran, P. Turon, J. Puiggalí and C. Alemán, ChemPhysChem, 2018, 19, 1746-1755). After that, the yield of NH₄⁺ increased with the volume of water, even though this enhancement was less pronounced once the 20 ml threshold was exceeded. Thus, the yield increased by 63% and 34% when the volume of water varies from 10 ml to 20 ml and from 20 ml to 40 ml, respectively.

The influence of the time on the yield of NH₄⁺ was examined considering reactions of 24 h, 48 h and 96 h while the N₂ pressure, the temperature and the initial content of water were kept at 6 bar, 120 °C and 20 ml, respectively (Figure 3d). The relative yield increment decreased with increasing time. Thus, the total yield increased by 150% when time grew from 24 h to 48 h, while this increment decreased to 76% only when time changed from 48 h to 96 h. The evolution of the yield from the catalyst and the supernatant followed the same behavior.

### 6. Proof of concept: Polluted air

As a proof of concept, the performance of the catalyst was explored with polluted air at atmospheric pressure. More specifically, air polluted by the combustion of fossil carburant was captured from a road with a large volume of traffic of cars and trucks and transferred to the reaction chamber. In addition of N₂ and O₂, the content of CO₂, CH₄ and other pollutants was significantly higher than the average of the ambient air. Therefore, the valuable products coming from both CO₂-, CH₄- and N₂-fixation were expected to be obtained by exposing the polluted air to the optimized reaction conditions. The reaction was conducted using p-HAp in contact with 20 ml of water at 120 °C and under UV radiation. Representative ¹H NMR spectra of the catalyst solution and the supernatant after 96 h reactions are shown in Figure 4, whereas the average yields for the different reaction products identified for three independent replicas are listed in the following Table 1.

As it can be seen, NH₄⁺ was observed in both the catalyst and the supernatant, even though the amount detected in the last was four times greater than in the first. The total yield of ammonium was of 20.7 ± 4.7 µmol/g of catalyst. Although this value was lower than the one observed using 6 bar of N₂ and 96 h at 120 °C (27.3 ± 2.8 µmol/g of catalyst), the difference was less than expected, suggesting that other components and/or pollutants of air, as for example O₂ and NO, could affect favorably to nitrogen fixation.

**Table 1. Yield of products (in µmol/g of catalyst) coming from the nitrogen and carbon fixation NH₄⁺ as extracted from the catalyst and the supernatant after the reaction of polluted air (see Figure 4).**

| **Product** | **Catalyst (µmol/g)** | **Supernatant (µmol/g)** | **Total (µmol/g)** |
|---|---|---|---|
| NH₄⁺ | 4.1 ± 0.8 | 16.6 ± 3.9 | 20.7 ± 4.7 |
| HCOOH | 20.1 ± 4.1 | 17.5 ± 2.7 | 37.6 ± 6.8 |
| CH₃CH₂OH | 3.5 ± 0.4 | 2.8 ± 0.4 | 6.3 ± 0.8 |
| CH₃COCH₃ | 7.8 ± 2.1 | 0.8 ± 0.1 | 8.6 ± 2.3 |
| CH₃COOH | 12.6 ± 1.9 | 52.8 ± 8.1 | 65.4 ± 10.0 |
| Total coming from CO₂ fixation | 44.0 ± 8.5 | 73.7 ± 11.3 | 118.7 ± 19.8 |
| Total of valuable products | **48.1 ± 8.6** | **90.3 ± 15.2** | **138.4 ± 23.8** |

Valuable products coming from carbon fixation were also detected. In addition of formic acid, acetone and acetic acid, which were previously detected as a consequence of the CO₂ desorption from the perfluorinated coating, ethanol was also identified. This was not a surprising result since previous studies proved that p-HAp catalyzes the formation of ethanol by carbon fixation from mixtures of CO₂ and CH₄, the latter among the common urban volatile organic compound emissions. Overall, these results demonstrate that the p-HAp catalyst cleans polluted air producing valuable compounds using mild reaction condition that can be employed as raw material for manufacturing fertilizers and other chemicals. It is worth noting that the simultaneous fixation of N₂ and CO₂ is a paradox since the CO₂ emitted by conventional production of ammonia using N₂ and H₂ causes massive greenhouse effect. Within this context, the p-HAp appears to be a step in the right direction to fight anthropogenic climate change without detriment in the production of fertilizers.

### 7. Conclusions

The electrosynthesis of ammonia from N₂ and water with p-HAp has been demonstrated using mild reaction conditions. The yield of the reaction has been optimized by considering the temperature, the N₂ pressure, the volume of water and the reaction time. The main part of the produced ammonia migrates from the catalyst to the water supernatant, which is in contact with the surface of the catalyst, facilitating its recovery and avoiding the catalyst saturation. On the other hand, this catalyst is also able to convert CO₂ into valuable chemical products, such as formic acid, ethanol and acetone. The coexistence of nitrogen- and carbon-fixation processes and the migration of the products to the liquid phase suggest that p-HAp is particularly suitable for the catalytic cleaning of polluted air. Within this context, the reaction produced using 1 bar of air in polluted by vehicle emissions resulted in the formation of 138.4 ± 23.8 µmol of valuable chemicals / g of catalyst (*i.e.* 118.7 ± 19.8 and 20.7 ± 4.7 µmol/g from carbon- and nitrogen-fixation processes).

## Claims

1. A process for producing ammonia comprising the step of
- contacting nitrogen and water with a catalyst comprising or consisting of permanently polarized hydroxyapatite.

2. The process according to claim 1, **characterized in that** the permanently polarized hydroxyapatite has
- a crystallinity > 65 %, in particular > 70 %, preferably > 75 %, more preferably from 65 % to 99 %,
and/or
- a proportion of amorphous calcium phosphate < 18 %, in particular from 0.1 % to 17 %, based on the total weight of the permanently polarized hydroxyapatite,
and/or
- a proportion of β-tricalcium phosphate < 36 %, in particular from 0.1 % to 35 %, based on the total weight of the permanently polarized hydroxyapatite,
and/or
- a bulk resistance from 10⁷ Ω cm² to 10⁵ Ω cm², in particular 10⁶ Ω cm² to 10⁵ Ω cm², wherein the bulk resistance preferably increases by only 4 % to 73 %, in particular 4 % to 63 %, preferably by 4%, after 3 months,
and/or
- a surface capacitance decreasing less than 8%, in particular from 8 % to 0.1 %, preferably 5 % to 3 %, after 3 months.

3. The process according to claim 1 or 2, **characterized in that** the permanently polarized hydroxyapatite is obtained or obtainable by a process comprising the steps of
(a) preparing samples comprising or consisting of hydroxyapatite,
(b) sintering the samples prepared in step (a) at a temperature between 700 °C and 1200 °C,
(c) applying a constant or variable DC voltage between 250 V and 2500 V for at least 1 minute at a temperature between 900 °C and 1200 °C or applying an equivalent electric field between 1.49 kV/cm and 15 kV/cm for at least 1 minute at a temperature between 900 °C and 1200 °C or applying an electrostatic discharge between 2500 V and 1500000 V for less than 10 minutes at a temperature between 900 °C and 1200 °C or applying an equivalent electric field between 148.9 kV/cm and 8928 kV/cm for less than 10 minutes at a temperature between 900 °C and 1200 °C, and
(d) cooling the samples obtained in step (c) maintaining the DC voltage or the equivalent electric field or
cooling the samples obtained in step (c) maintaining or without maintaining the electrostatic discharge or the equivalent electric field.

4. The process according to any of the preceding claims, **characterized in that** the permanently polarized hydroxyapatite is obtained or obtainable by a process comprising the steps of
(a) preparing samples comprising or consisting of hydroxyapatite,
(b) sintering the samples prepared in step (a) at a temperature of 1000 °C, in particular for 2 h,
(c) applying an equivalent electric field of 3 kV/cm at a temperature of 1000 °C, in particular for 1 h, and
(d) cooling the samples obtained in step (c) maintaining the equivalent electric field, in particular for 30 minutes.

5. The process according to any of the preceding claims, **characterized in that** the contacting step is carried out with a volumetric ratio of the water to the catalyst of 10000 : 1 to 0.1 : 1, in particular 1000 : 1 to 0.1 : 1, preferably 1000 : 1 to 100 : 1.

6. The process according to any of the preceding claims, **characterized in that** the contacting step is carried out under a pressure, in particular under a pressure of nitrogen, of 0.01 bar to 20 bar, preferably 0.3 bar to 10 bar, in particular of 6 bar.

7. The process according to any of the preceding claims, **characterized in that** the contacting step is carried out with a molar ratio of nitrogen to the catalyst of 400 to 20, preferably 200 to 60, in particular 120.

8. The process according to any of the preceding claims, **characterized in that** the contacting step is carried out at a temperature of ≥ 95 °C to 140 °C, preferably ≥ 95 °C to 120 °C, more preferably 100 °C to 120 °C, in particular of 120 °C.

9. The process according to any of the preceding claims, **characterized in that** the contacting step is carried out for 0.0001 h to 120 h, in particular 0.1 h to 96 h, preferably 24 h to 72 h.

10. The process according to any of the preceding claims, **characterized in that** the contacting step is carried out under UV irradiation or UV-Vis irradiation, in particular having a wavelength from 200 nm to 850 nm, in particular 240 nm to 400 nm, preferably 240 nm to 270 nm, more preferably 250 nm to 260 nm, especially preferably of 253.7 nm.

11. The process according to claim 10, **characterized in that** the UV irradiation and/or visible light irradiation has an irradiance from 0.1 W/m² to 200 W/m², in particular 1 W/m² to 50 W/m², preferably 2 W/m² to 10 W/m².

12. The process according to claim 10 or 11, **characterized in that** a surface of the catalyst is exposed to the UV irradiation or UV-Vis irradiation, wherein the surface of the catalyst being exposed to the UV irradiation or UV-Vis irradiation is not covered by the water.

13. The process according to any of the preceding claims, **characterized in that** the contacting step is carried under an atmosphere which is, apart from the nitrogen and optionally water vapor, free or basically free of any further gas.

14. The process according to any of the claims 1 to 12, **characterized in that** the contacting step is carried out by using air, in particular polluted air, wherein the nitrogen is part of the air.

15. Use of a process according to any of the claims 1 to 12 or 14 for removing at least nitrogen, in particular nitrogen and carbon dioxide, from air, in particular polluted air.
